# EUROPÄISCHE PATENTSCHRIFT

(11) **EP 2 044 742 B1**
(45) Veröffentlichungstag und Bekanntmachung des Hinweises auf die Patenterteilung: **13.01.2010**
(21) Anmeldenummer: 07787101.0
(22) Anmeldetag: 05.07.2007
(51) Int. Cl.: H04L 25/03

(54) **EMPFÄNGERSTRUKTUR UND VERFAHREN ZUR DEMODULATION EINES QUADRATURMODULIERTEN SIGNALS**
RECEIVER STRUCTURE AND METHOD FOR THE DEMODULATION OF A QUADRATURE-MODULATED SIGNAL
STRUCTURE DE RÉCEPTEUR ET PROCÉDÉ POUR LA DÉMODULATION D'UN SIGNAL MODULÉ EN QUADRATURE

(30) Priorität: 14.07.2006 DE 102006032786
(43) Veröffentlichungstag der Anmeldung: 08.04.2009
(73) Patentinhaber: Nokia Siemens Networks GmbH & Co. KG, 81541 München (DE)
(72) Erfinder: HAUSKE, Fabian, 81477 München (DE); LANKL, Berthold, 85658 Egmating (DE); SCHMIDT, Ernst-Dieter, 83620 Feldkirchen-Westerham (DE); XIE, Changsong, 81739 München (DE)
(74) Vertreter: Bruglachner, Thomas E.
(86) Internationale Anmeldenummer: PCT/EP2007/056810
(87) Internationale Veröffentlichungsnummer: WO 2008/006768

(56) Entgegenhaltungen:
- EP-A- 0 218 181
- EP-A- 0 237 287
- US-A- 4 716 577

## Beschreibung

Digitale Informationen werden mittels einem oder mehrerer Signale mit einer Vielzahl von Verfahren übertragen. Um ein Signal mit digitalen Informationen zu erzeugen, werden so genannte digitale Modulationsverfahren verwendet. Hierbei werden die binären Informationen auf einen Träger aufgeprägt bzw. moduliert. Kennzeichen der digitalen Modulationsverfahren ist, dass für die Aufprägung nur diskrete Amplituden-, Phasen- oder Frequenzwerte verwendet werden, wobei ein solcher diskreter Wert einem Binärwert oder einer Binärfolge entspricht. Grundsätzlich werden diese digitalen Modulationsverfahren in Amplitudenumtastung bzw. Amplitude Shift Keying, kurz ASK, Phasenumtastung bzw. Phase Shift Keying, kurz PSK, bzw. Frequenzumtastung bzw. Frequency Shift Keying, kurz FSK, eingeteilt. Es sind aber auch Kombinationen aus Amplituden-, Phasen- und/oder Frequenzumtastung möglich. Häufig wird eine Kombination aus Amplituden- und Phasenumtastung verwendet, die auch als Quadratur-Amplitudenmodulation, kurz QAM, bezeichnet wird. Je nach Anzahl der diskreten Werte wird diese als 16-QAM, 64-QAM, usw. bezeichnet, wobei ein diskreter Wert jeweils einem bestimmten Amplituden- und Phasenwert des Signals entspricht.

Bei Verwendung zweier diskreter Amplituden-, Phasen- oder Frequenzwerte entspricht in der Regel ein Wert einer logischen Null und der andere Wert einer logischen Eins. Werden mehrere diskrete Werte verwendet, so entspricht jeder Wert einer Binärfolge. Beispielsweise können bei vier diskreten Werten, wie bei einer Vierphasenumtastung respektive Quaternary Phase Shift Keying, kurz 4-PSK oder QPSK, bei denen vier Phasenzustände wie 0 Grad; 90 Grad; 180 Grad; 270 Grad definiert werden, jeweils 2 Bit pro Wert übertragen werden (00, 01, 11, 10). Bei acht definierten Werten, wie bei einer 8-fachen Amplituden- (8-ASK), Phasen-(8-PSK), Frequenzumtastung (8-FSK) oder Amplituden-Phasenumtastung (8-QAM), können drei Bit gleichzeitig übertragen werden.
Eine Verwendung einer Vielzahl von diskreten Werten bzw. Stufen wird auch als mehrstufige Modulation bzw. mehrstufiges Modulationsverfahren bezeichnet.

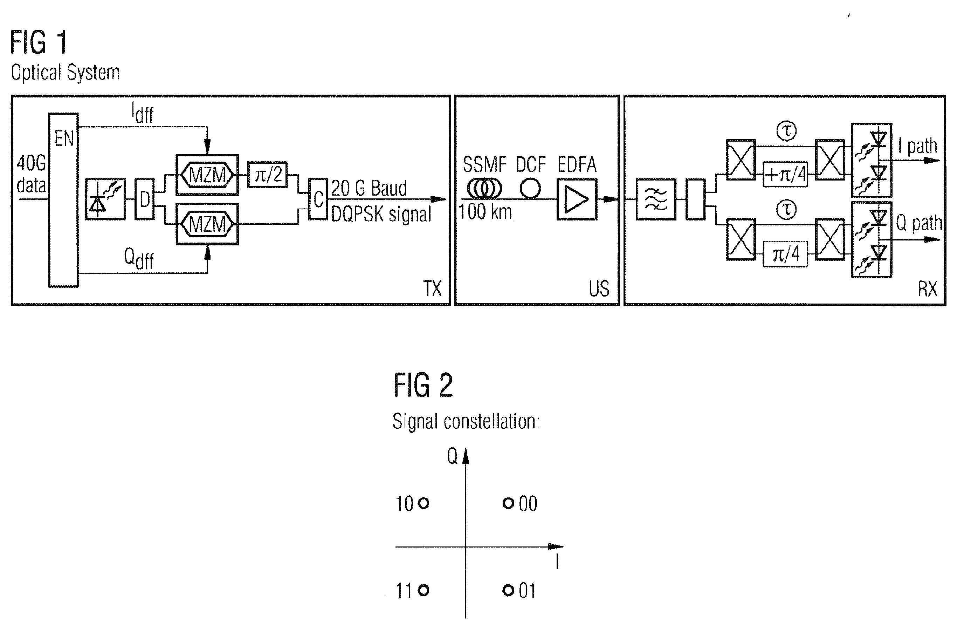

Um mehrstufige Signale zu erzeugen, insbesondere mehrstufige phasenmodulierte oder amplitudenphasenmodulierte Signale, wird häufig die so genannte Quadraturmodulation verwendet. Dabei wird ein erzeugter Träger in einen ersten und zweiten Träger gedoppelt. Der erste Träger wird direkt mit einem ersten, so genannten Inphase-Signal moduliert. Der zweite Träger wird mit einem zweiten, so genannten Quadratur-Signal moduliert und um 90° bzw. Pi/2 in der Phase gegenüber dem ersten Träger verschoben. Anschließend werden beide derart modulierten Träger wieder zusammengefasst und bilden ein so genanntes quadraturmoduliertes Signal. Die Inphase- und Quadratur-Signale werden durch einen Encoder erzeugt. Dieser erzeugt aus dem zugeführten Datensignal die entsprechenden Inphase- und Quadratur-Signale. Für eine optische Übertragung ist dies prinzipiell in Figur 1 dargestellt. Ein Datensignal, beispielsweise ein 40 Gbit Signal, wird einem Encoder EN zugeführt, der jeweils ein Inphase- und Quadratursignal erzeugt. Diese werden jeweils einem Mach-Zehnder-Modulator MZM zugeführt, die jeweils einen Träger modulieren, der durch eine Laserdiode erzeugt und beiden Mach-Zehnder-Modulatoren MZM zugeführt wird. Einer der beiden modulierten Träger wird um 90° bzw. Pi/2 phasenverschoben und anschließend werden beide Signale durch einen Combiner C zu einem quadraturmodulierten Signal zusammengefasst. Dieses Signal wird mittels einer Übertragungsstrecke US, die als Lichtwellenleiter SSMF ausgeführt ist und dispersionskompensierende Mittel DCF sowie Verstärker EDFA aufweisen kann, übertragen. Empfangsseitig wird das übertragene Signal in einem Empfänger RX gegebenenfalls Bandpassgefiltert und die beidem Inphase- und Quadratursignale mit dem Fachmann bekannten Mitteln zurückgewonnen.

Zur Auswertung der empfangenen Inphase- und Quadraturwerte gibt es eine Reihe von Verfahren.
Die Auswertung der empfangenen Inphase- und Quadraturwerte erfolgt mit Entzerrern, Entscheidern, Equaliziern bzw. Filtern.
Als Entzerrer im Sinne der vorliegenden Erfindung wird ein Entscheider verstanden, der je nach Pegel des zugeführten Signals eine Entscheidung gemäß einem vorgegebenen Entscheidungsraum abgibt. Dieser Entscheidungsraum ist durch so genannte Metriken definiert.
Eine optimale Entzerrung mehrstufiger Modulationsverfahren ist aus dem Bereich der elektrischen Nachrichtenübertragung bekannt, eine Realisierung für beliebige Datenraten ist durch die Verarbeitungsgeschwindigkeit elektronischer Bauteile beschränkt. Insbesondere bei der optischen Übertragung mit entsprechend hohen Datenraten ist eine im elektrischen Bereich möglicherweise realisierbare optimale Entzerrung nicht möglich.
Eine Entzerrung ist in US 2003/0007552 A1 angegeben, die hierfür einen reduced alphabet equalizer mit iterativer Equalizierung verwendet.
In US 2003/0063681 A1 ist eine Anordnung nebst Verfahren zur Erkennung digitaler Daten mittels MLSE und dynamisch veränderten Trellis angegeben.
In der europäischen Patentanmeldung EP 1 494 413 A1 ist ein MLSE für optische Systeme angegeben, der mit einer eindimensionalen Metrik arbeitet sowie diese ermittelt.

Ein weiterer, eine Transversalstruktur aufweisender Empfänger für quadraturmodulierte Signale ist in EP-A-0237287 beschrieben.

Die beiden Inphase- und Quadratursignale bilden das quadraturmodulierte Signal. Dieses kann man anschaulich in einer zweidimensionalen Ebene darstellen, wobei das Inphase-Signal auf der X-Achse und das Quadratur-Signal auf der Y-Achse abgebildet wird. Ein Signalwert bzw. Signalzustand des quadraturmodulierten Signals ist ein Punkt in dieser zweidimensionalen Ebene. Die Amplitude entspricht dem Abstand zum Mittelpunkt und die Phase entspricht dem Winkel bezogen auf die positive X-Achse im entgegengesetzten Uhrzeigersinn. Bei einer Phasenmodulation bzw. Phasenumtastung mit konstanter Amplitude liegen somit die diskreten Phasenwerte auf einem Kreis um den Mittelpunkt des Koordinatensystems und der Phasenwinkel bzw. Phasenwert entspricht dem Winkel zur positiven X-Achse. In Figur 2 ist dies für eine 4 Phasenumtastung bzw. Quaternary Phase Shift Keying (QPSK) beispielhaft dargestellt. Es sind 4 diskrete Phasenwerte (45°, 135°, 225°, 315°) dargestellt, denen jeweils ein Doppelbit zugeordnet ist (00, 10, 11, 01).
Bei einer Amplituden-Phasen-Modulation bzw. Quadraturamplitudenmodulation werden gemäß einem Raster diskrete Punkte in diesem zweidimensionalen Koordinatensystem für eine Bitfolge festgelegt. Der Winkel sowie der-Abstand zum Mittelpunkt bilden Phasen- bzw. Amplitudenwerte.

Aufgabe der vorliegenden Erfindung ist es, die Demodulation von quadraturmodulierten Signalen zu verbessern.

Diese Aufgabe wird durch einen Empfänger mit den Merkmalen des Patentanspruchs 1 und ein Verfahren mit den Merkmalen des Patentanspruchs 13 gelöst.

Der Vorteil der Erfindung besteht darin, dass durch eine kreuzweise verbundene Anordnung mehrerer Entzerrer eine Ermittlung des Inphasesignals unter Berücksichtigung des ermittelten Quadratursignals und umgekehrt erfolgt, wodurch eine genauere Ermittlung der gesendeten Signalfolge möglich ist. Ferner ist diese Ermittlung besonders bei der optischen Übertragung einfach und ökonomisch selbst bei hohen Datenraten zu realisieren.

Vorteilhafte Ausgestaltungen der Erfindung sind in den Unteransprüchen sowie im Ausführungsbeispiel angegeben.

In einer vorteilhaften Ausgestaltung der Erfindung wird die Entzerrung mehrfach durchgeführt, so dass eine noch genauere Ermittlung des ursprünglich gesendeten Signals erfolgt.

Ein Ausführungsbeispiel der Erfindung wird anhand der Zeichnung näher erläutert. Dabei zeigt:
- Figur 1: ein optisches Übertragungssystem
- Figur 2: eine Signalkonstellation
- Figur 3: ein Blockschaltbild der erfindungsgemäßen Empfängeranordnung
- Figur 4: eine weitere Ausgestaltung gemäß Figur 3
- Figur 5: ein Diagramm und eine Tabelle zur Erläuterung der Erfindung.

Figur 1 zeigt ein bereits in der Einleitung beschriebenes optisches Übertragungssystem gemäß dem Stand der Technik. In Figur 2 ist eine bereits beschriebene Signalkonstellation für ein QPSK-Signal bzw. Vierphasenumtastsignal dargestellt.

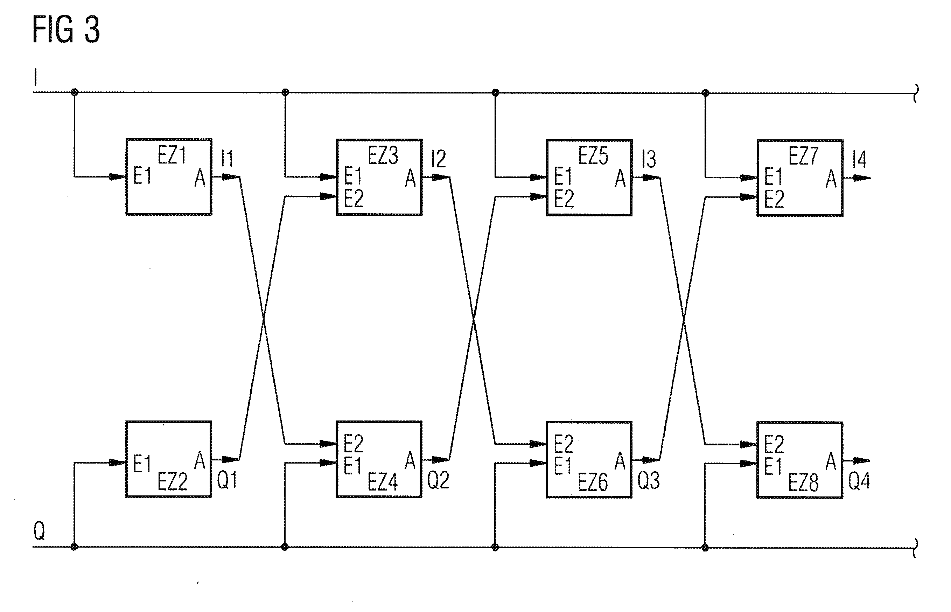

Figur 3 zeigt ein Blockschaltbild der erfindungsgemäßen Anordnung zur Auswertung des Inphase- und Quadratursignals. Dieses weist acht Entzerrer EZ1 bis EZ8 auf. Das Inphase-Signal wird jeweils den Entzerrern EZ1, EZ3, EZ5 und EZ7 an ihrem ersten Eingang E1 zugeführt. Das Quadratursignal Q wird jeweils den Entzerrern EZ2, EZ4, EZ6 und EZ8 an ihren ersten Eingängen E1 zugeführt. Das Ausgangssignal I1 des ersten Entzerrers EZ1 wird einem zweiten Eingang des vierten Entzerrers EZ4 zugeführt. Das Ausgangssignal Q1 des zweiten Entzerrers EZ2 wird einem zweiten Eingang des dritten Entzerrers EZ3 zugeführt. Das Ausgangssignal I2 des dritten Entzerrers EZ3 wird einem zweiten Eingang des sechsten Entzerrers EZ6 zugeführt. Das Ausgangssignal Q2 des vierten Entzerrers EZ4 wird einem zweiten Eingang des fünften Entzerrers EZ5 zugeführt. Das Ausgangssignal I3 des fünften Entzerrers EZ5 wird einem zweiten Eingang des achten Entzerrers EZ8 zugeführt. Das Ausgangssignal Q3 des sechsten Entzerrers EZ6 wird einem zweiten Eingang des siebten Entzerrers EZ7 zugeführt, an dessen Ausgang das entzerrte Inphase-Signal I4 abgegeben wird. Am Ausgang des achten Entzerrers EZ8 wird das entzerrte Quadratur-Signal Q4 abgegeben.

Die Funktionsweise ist die Folgende. Das Inphase-Signal I wird dem ersten Entzerrer EZ1 zugeführt, der eine Entzerrung des Inphase-Signals I durchführt und ein entzerrtes erstes Inphase-Signal I1 abgibt und dem vierten Entzerrer EZ4 zuführt. Dieser führt eine Entzerrung des ihm zugeführten Quadratursignals Q in Abhängigkeit vom entzerrten ersten Inphase-Signal I1 durch und gibt ein entzerrtes zweites Quadratursignal Q2 an seinem Ausgang ab.
Der zweite Entzerrer EZ2 führt eine Entzerrung des ihm zugeführten Quadratursignals Q durch und gibt ein entzerrtes erstes Quadratursignal Q1 ab, das dem dritten Entzerrer EZ3 zugeführt wird. Dieser führt eine Entzerrung des ihm am ersten Eingang zugeführten Inphase-Signals I in Abhängigkeit vom entzerrten ersten Quadratursignal Q1 durch und gibt ein entzerrtes zweites Inphase-Signal I2 an seinem Ausgang A ab.

Das derart entzerrte zweite Inphase-Signal I2 und das derart entzerrte zweite Quadratursignal Q2 stehen im grundlegendsten Fall der Erfindung nun zur weiteren Verarbeitung zur Verfügung.
Der Vorteil besteht darin, dass nicht nur eine singuläre Entzerrung des jeweiligen Signals erfolgt, sondern eine Entzerrung des Signals in Abhängigkeit vom jeweils anderen übertragenen und entzerrten Signal. Damit ist eine genauere Entscheidung über die übermittelten Signalfolge möglich.

Das entzerrte zweite Inphase-Signal I2 und das entzerrte zweite Quadratur-Signal Q2 können nun in weiteren Stufen wiederholt unter Berücksichtigung der jeweils anderen Signalkomponente entzerrt werden. So wird gemäß Figur 3 das entzerrte zweite Inphase-Signal I2 einem weiterem Entzerrer EZ6 an seinem zweiten Eingang zugeführt, der eine Entzerrung des an seinem ersten Eingang E1 zugeführten Quadratur-Signals Q in Abhängigkeit vom entzerrten zweiten Inphase-Signal I2 durchführt und ein entzerrtes drittes Quadratur-Signal Q3 am Ausgang abgibt. Dieses kann einer weiteren Stufe zugeführt werden. Gemäß Figur 3 wird das entzerrte dritte Quadratur-Signal Q3 einem zweiten Eingang des siebten Entzerrers EZ7 zugeführt, der eine Entzerrung des an seinem ersten Eingang E1 zugeführten Inphase-Signal I in Abhängigkeit vom entzerrten dritten Quadratur-Signal Q3 durchführt und ein viertes entzerrtes Inphase-Signal I4 an seinem Ausgang abgibt.
In entsprechender Weise wird das entzerrte zweite Quadratursignal Q2 des vierten Entzerres EZ4 dem fünften Entzerrer EZ5 an seinem zweiten Eingang zugeführt. Dieser entzerrt das an seinem ersten Eingang zugeführt Inphase-Signal I in Abhängigkeit vom zugeführten entzerrten zweiten Quadratursignal Q2 und gibt ein entzerrtes drittes Inphase-Signal I3 an seinem Ausgang ab. Dieses kann nun wiederum einem zweiten Eingang des achten Entzerrers EZ8 zugeführt werden, der das an seinem ersten Eingang zugeführte Quadratur-Signal Q in Abhängigkeit von diesem entzerrt und an seinem Ausgang A ein entzerrtes viertes Quadratursignal Q4 abgibt.

In entsprechender Weise können weitere Stufen zur Entzerrung nachgeschaltet werden.
Kern der Erfindung ist das zumindest eine erste Entzerrungsstufe mit Entzerrern EZ1, EZ2 durchgeführt wird, denen eine zweite Entzerrungsstufe mit den Entzerrern EZ3, EZ4 folgt, die eine Entzerrung ihres jeweiligen Signals in Abhängigkeit von der ersten Entzerrung des jeweils anderen Signals durchführen.
Diesen können in analoger Weise dritte, vierte, fünfte usw. Stufen folgen.

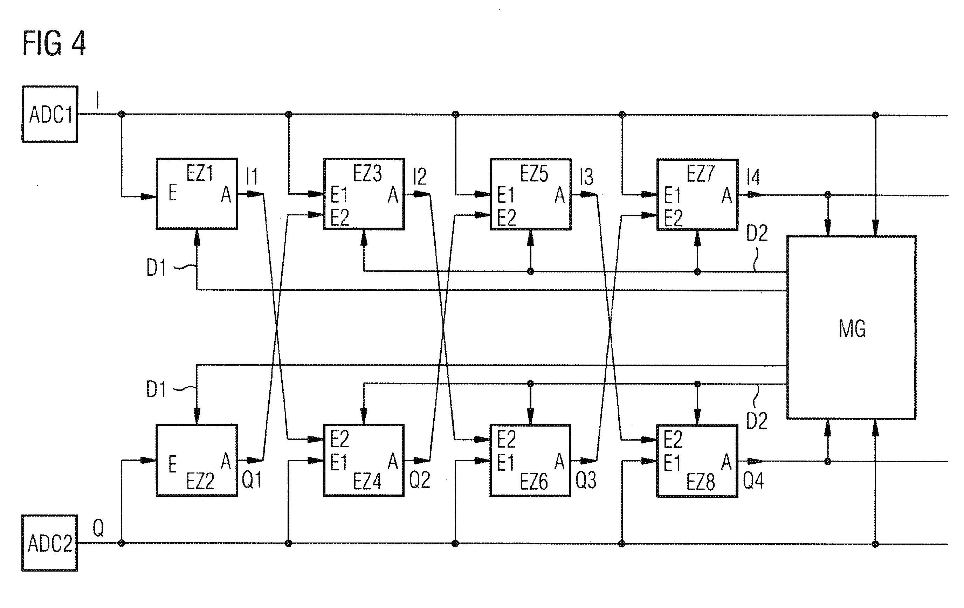

Figur 4 zeigt eine Anordnung gemäß Figur 3, mit dem Unterschied, dass vor der Entzerrung die Inphase- und Quadratursignale mittels Analog-Digitalumsetzern ADC1, ADC2 analog-digital umgesetzt werden, so dass eine digitale Entzerrung erfolgen kann. Hierzu können die Entzerrer als digitale Filter oder maximum likelihood sequence estimation Entzerrer ausgestaltet sein. Diese maximum likelihood sequence estimation Entzerrer bzw. Einrichtungen kurz MLSE weisen üblicherweise eine Vergleichs- bzw. Entscheidungstabelle auf, die mit Daten bzw. Metriken gefüllt sind um die übermittelte Signalfolge des jeweiligen Kanals sicher schätzen zu können. Die Erfindung eignet sich somit sehr gut für Trellis-codierte Signale.
Die Daten der Metrik werden durch einen Metrikgenerator MG erzeugt, dem einerseits die empfangene Inphase- und Quadratur-Signale zugeführt werden und andererseits das bzw. die entzerrten Inphase- und Quadratur-Signale, d.h. je nach Anzahl der Stufen das entzerrte Inphase- bzw. Quadratursignal der letzten Stufe. Durch Vergleich der unentzerrten und entzerrten Inphase- bzw. Quadratursignale und durch die Verwendung von vorher bestimmten Testsequenzen können so Abschätzungen über den Entscheidungraum für eine im jeweiligen Signalpfad (Inphase- oder Quadratur) übermittelte Signalfolge ermittelt werden. Diese Daten bzw. Metriken werden den Entzerrern zugeführt, womit diese initialisiert bzw. geladen werden.
Die Daten bzw. Metriken werden in einer Vergleichstabelle des Entzerrers gespeichert. Ein geeignete Algorithmus im Entzerrer, wie z.B. der Viterbi-Algorithmus, ermittelt nun aus den zugeführten Signalen (Inphase, Quadratur) mittels der Tabelle die am wahrscheinlichsten übermittelte Signalfolge. In den Entzerrern (EZ1, EZ2) der ersten Stufe erfolgt diese Ermittlung allein auf Grundlage des zugeführten Inphase- oder Quadratur-Signals. In den Entzerrern der nachfolgenden Stufe(n) erfolgt diese Ermittlung unter Berücksichtigung des anderen Signals. In den Entzerrern der nachfolgenden Stufe(n) werden komplexere Daten bzw. Metriken verwendet.

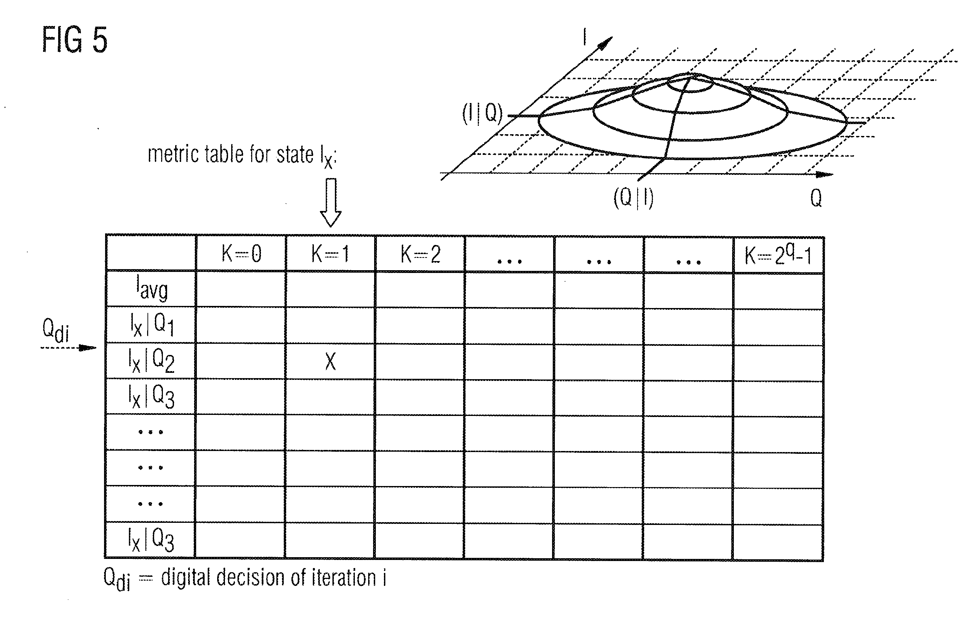

Eine derartige Tabelle mit Entscheidungsdiagramm zur Auswahl einer Metrik ist in Figur 5 dargestellt.

Als Entzerrer im Sinne der vorliegenden Erfindung wird ein Entscheider verstanden, der je nach Pegel des zugeführten Signals eine Entscheidung gemäß einem vorgegebenen Entscheidungsraum abgibt.
Dabei weist ein Entzerrer der ersten Stufe zumindest einen eindimensionalen Entscheidungsraum auf, d.h. nur an Hand des zugeführten Eingangssignals wird ein zugeordnetes Ausgangsignal abgegeben.
In den weiteren Stufen weisen die Entzerrer zumindest einen zweidimensionalen Entscheidungsraum auf, d.h. die Entscheidung des abzugebenden Ausgangssignal erfolgt unter Berücksichtung der Entzerrung des jeweils anderen Pfades.
Der Entscheidungsraum wird durch die Metriken bestimmt. D.h. an Hand der Metriken wird die Entscheidung getroffen.
Jeder Entzerrer hat zur Entscheidung eine der Figur 5 entsprechende Metrik, beispielsweise eine Metrik Tabelle, wonach für einen empfangenen Inphase-Signal-Wert der wahrscheinlich gesendete Inphase-Signal-Wert unter Berücksichtigung des Quadratur-Signal-Wertes ermittelt wird, entsprechend Figur 5. D.h. es existiert eine so genannte Wahrscheinlichkeitsdichtefunktion, kurz WDF, für empfangene Kombinationen der Inphase- und Quadratursignale um die am wahrscheinlich gesendet sten Inphase- und Quadratursignale ermitteln zu können.

Der Entzerrer kann auch derart realisiert sein, dass dessen Entscheidung durch
a) einen Schwellwertschalter, wie einen adaptiven Schwellwertschalter oder einem Schwellwertschalter mit Distributed Feedback Equalizer, oder
b) eine Detektionseinheit oder
c) eine MLSE durchgeführt wird.
   Dabei kann dem Schwellwertschalter, der Detektionseinheit oder MLSE ein Filter, wie ein finite impulse response, kurz FIR-, ein infinite impulse response, kurz IIR-, oder analoges Filter vorgeschaltet sein.

Im Folgenden wird nochmals näher auf die Erfindung eingegangen.
Bei mehrstufigen Modulationsverfahren wird eine Bitfolge bzw. ein Bitmuster durch einen Punkt in der zweidimensionalen Darstellung bzw. im komplexen Signalraum dargestellt.
Während der Übertragung eines quadraturmodulierten Signals wird sowohl die Inphase-komponente als auch die Quadraturkomponente verzerrt, d.h. ein Punkt im sendeseitigen Signalraum entspricht nicht mehr dem Punkt im empfangsseitigen Signalraum.
Da sich im Allgemeinen die Verzerrung sowohl auf die Inphasekomponente (den Realteil) als auch auf die Quadraturkomponente (den Imaginärteil) auswirkt und die beiden Komponenten verkoppelt sind, wird bei einer getrennten Entzerrung die Information, die in der Kopplung enthalten ist, vernachlässigt. Die Kopplungsinformation wird nun erfindungsgemäß derart ausgenutzt, indem die erste Entzerrungsstufe beide Komponenten getrennt auswertet und in den folgenden Stufen eine gegenseitige Berücksichtigung erfolgt.
Der ersten Entzerrungsstufe steht nur eine eingeschränkte Anzahl von Pfadmetriken bzw. Zustandsübergängen für die übermittelte Signalfolge zur Verfügung. Die Einschränkung beruht darauf, dass bei dieser ersten Entzerrungsstufe lediglich eine von zwei (oder mehr) möglichen Dimensionen für die Auswertung berücksichtigt werden. Aus dieser Reduktion ergeben sich Metriken, die aus einer Mittelung über eine größere Anzahl von ursprünglich mehrdimensional modellierten Zustandsübergängen hervorgehen.
In der zweiten Entzerrungsstufe können aus einer größeren Anzahl von Zuständen bzw. Zustandsübergängen die Metriken gewählt werden, die für die bereits ermittelten komplementären Signale in Frage kommen, und so mehr bzw. genauere Informationen zur Entzerrung verwendet werden. Die Vorentscheidung des komplementären Signals (Inphase oder Quadratur) gibt ein Maß für die Wahrscheinlichkeit des Zustandes eines auszuwertenden Signals und dient als Auswahlkriterium.

In weiteren Entzerrungsschritten kann nun schrittweise die Kopplungsinformationen bestmöglich ausgenutzt werden.

Der Performance-Gewinn nimmt in der Regel mit der Anzahl der Stufen schrittweise ab. Ein Maß für den Performancegewinn ist der Vergleich der entzerrten Sequenzen zweier aufeinanderfolgenden Stufen (Iterationen). Je geringer die Veränderung ist, desto geringer ist der Performancegewinn. Tritt ab einer bestimmten Stufe keine Veränderung mehr auf, ist eine maximale Entzerrung durchgeführt worden. Die Entzerrung kann in bzw. nach dieser Stufe abgebrochen werden.

Die Erfindung ist unabhängig von einem Verfahren zur Ermittlung der Metriken durch die Metrikgenerierung MG. Dieses kann unabhängig von der Entzerrung erfolgen, beispielsweise starr und hardware-basiert arbeiten.

Durch die erfindungsgemäße parallele Anordnung verschalteter Einzelkomponenten wird eine geringe Komplexität erzielt, die eine einfache Entzerrung von mehrstufigen Modulationsverfahren ermöglicht.

Mißt man die Komplexität anhand der Zustände im Entzerrer, so erhält man bei einer Gedächtnislänge L des Entzerrers und einer Anzahl M von diskreten Werten bzw. Stufen des mehrstufigen Modulationsverfahrens für den optimalen komplexen Entzerrer M^{L} Zustände. Für eine erfindungsgemäße Verkettung mit i hintereinander geschalteten Entzerrer-Stufen bzw. Iterationen, die in zwei parallelen Ketten angeordnet sind, ergibt sich demgegenüber eine Komplexität von *(2.i.2^{L})* Zuständen.

Durch die Verwendung Entzerrern, wie insbesondere MLSE, und deren kreuzweise Verkopplung lassen sich bei hohen Verarbeitungsraten bzw. Datenraten eine höhere Leistungsfähigkeit im Vergleich zu einzelnen Komponenten (MLSE) erzielen.

Eine Komplexitätsreduktion wird durch die kreuzweise verkoppelte iterative Anordnung erzielt.
Dabei können alle Bestandteile hardwarebasiert realisiert sein, wodurch sich sehr hohe Datenraten realisieren lassen.

Ferner kann jedem Entzerrer eine Forward-Error-Correction Einheit, kurz FEC-Einheit, zur Fehlerkorrektur nachgeschaltet sein. So können zwischen einzelnen Entzerrern FEC-Einheiten angeordnet sein.

Weiterhin kann jeder Entzerrer ein und dieselbe Metrik der Metrikgenerierung MG verwenden, so dass durch diese Synergie eine ökonomische Anordnung bzw. Verfahren vorliegt.

Ferner kann beispielsweise der Entzerrer der ersten Stufe ein MLSE, ein Schwellwertentscheider oder eine andere Detektionseinheit sein. In der ersten Stufe wird lediglich eine halbwegs "richtige" Schätzung, BER<10%, benötigt. Verwendet man einen MLSE kann der Synergieeffekt bei der Bildung der Metriken basierend auf den Wahrscheinlichkeitsdichten, WDFs, ausgenutzt werden. Diese können durch einfache Mittelung aus den Metriken der nachfolgenden Stufen gebildet werden. Für die zweite Stufe (1. Iteration) muss man unterscheiden zwischen der "vollständigen" Metrik, die alle möglichen Zustände und deren WDFs enthält, sowie deren Untermengen.
Mit Hilfe einer Vorentscheidung wird aus der vollständigen Metrik eine "günstige" Untermege ausgewählt. Zum Beispiel: Eine Zustandsmodellierung mit 3 Symbolen für QPSK-Modulation: Z={Iv,Qv,I,Q,In,Qn}, I,Q binär; 4^3 Zustände. Aus dem I-Pfad der vorangegangenen Iteration sind Iv,I, In bekannt. Für die aktuelle Iteration des Q-Pfades wählt man nur Zustände aus, die dieses Muster enthalten, d.h. die verbleibenden 2^3 günstigen Zustände enthalten lediglich Permutationen bezüglich Qv,Q,Qn.

## Patentansprüche

1. Empfänger für ein quadraturmoduliertes Signal, das in ein Inphase- (I) und ein Quadratur-Signal (Q) aufteilbar ist,
**dadurch gekennzeichnet,**
**dass** das Inphase-Signal (I) einem ersten und einem dritten Entzerrer (EZ1, EZ3) und das Quadratur-Signal (Q) einem zweiten und einem vierten Entzerrer (EZ2, EZ4) zugeführt ist, bei dem der erste und zweite Entzerrer (EZ1, EZ2) jeweils eine erste Entzerrung des jeweiligen Signals durchführt,
**dass** ein Ausgang des ersten Entzerrers (EZ1) mit einem zweiten Eingang des vierten Entzerrers (EZ4) verbunden ist, der durch eine zweite Entzerrung des Quadratur-Signals (Q) in Abhängigkeit vom zugeführten entzerrten Inphase-Signal (I1) des ersten Entzerrers (EZ1) ein entzerrtes Quadratur-Signal (Q2) abgibt,
**dass** ein Ausgang des zweiten Entzerrers (EZ2) mit einem zweiten Eingang des dritten Entzerrers (EZ3) verbunden ist, der durch eine zweite Entzerrung des Inphase-Signals (I) in Abhängigkeit vom zugeführten entzerrten Quadratur-Signal (Q1) des zweiten Entzerrers (EZ2) ein entzerrtes Inphase-Signal (I2) abgibt.

2. Empfänger nach Anspruch 1,
**dadurch gekennzeichnet,**
**dass** das Inphase-Signal (I) einem fünften Entzerrer (EZ5) und das Quadratur-Signal (Q) einem sechsten Entzerrer (EZ6) zugeführt ist,
**dass** der Ausgang des dritten Entzerrers (EZ3) mit einem zweiten Eingang des sechsten Entzerrers (EZ6) und der Ausgang des vierten Entzerrers (EZ4) mit einem zweiten Eingang des fünften Enzerrers (EZ5) verbunden ist, so dass der fünfte und sechste Entzerrer (EZ5, EZ6) eine dritte Entzerrung in Abhängigkeit vom Ergebnis der zweiten Entzerrung des jeweils anderen Signals durchführt und am Ausgang des fünften und sechsten Entzerrers (EZ5, EZ6) ein entzerrtes Inphase- (I) oder Quadratur-Signal (Q) anliegt.

3. Empfänger nach Anspruch 2,
**dadurch gekennzeichnet,**
**dass** weitere nachgeschaltete Entzerrer vorgesehen sind, denen jeweils das Inphase- (I) oder Quadratur-Signal (Q) sowie das jeweils andere entzerrte Signal der vorhergehenden Stufe zugeführt sind, so dass mindestens eine weitere Entzerrung durchführbar ist.

4. Empfänger nach einem der vorhergehenden Ansprüche,
**dadurch gekennzeichnet,**
**dass** der Signalweg des Inphase- (I) und des Quadratur-Signals (Q) jeweils einen Analog-Digital-Umsetzer (ADC1, ADC2) aufweist.

5. Empfänger nach einem der vorhergehenden Ansprüche,
**dadurch gekennzeichnet,**
**dass** die Entzerrer als digitale Filter ausgestaltet sind.

6. Empfänger nach einem der Ansprüche 1 bis 5,
**dadurch gekennzeichnet,**
**dass** die Entzerrer als Maximum-Likelihood-Sequence-Estimation-Entzerer ausgestaltet sind.

7. Empfänger nach einem der Ansprüche 1 bis 4,
**dadurch gekennzeichnet,**
**dass** zumindest ein Entzerrer als Serienschaltung eines Filters und eines Maximum-Likelihood-Sequence Estimation-Entzerers oder eines Schwellwertschalters oder einer Detektionseinrichtung ausgestaltet ist.

8. Empfänger nach Anspruch 7,
**dadurch gekennzeichnet,**
**dass** das Filter als FIR, IIR oder analoges Filter ausgestaltet ist.

9. Empfänger nach Anspruch 6, 7 oder 8,
**dadurch gekennzeichnet,**
**dass** die Maximum-Likelihood-Sequence-Estimation-Entzerrer eine Vergleichstabelle und eine Vergleichseinrichtung, die einen Viterbi-Algorithmus ausführt, aufweisen.

10. Empfänger nach Anspruch 9,
**dadurch gekennzeichnet,**
**dass** die Vergleichstabelle des ersten und zweiten Entzerrers mit ersten Daten einer ersten Metrik initialisiert und die weiteren Entzerrer mit zweiten Daten einer zweiten Metrik initialisiert sind.

11. Empfänger nach Anspruch 10,
**dadurch gekennzeichnet,**
**dass** die ersten und zweiten Daten der ersten und zweiten Metrik aus einem Vergleich der unentzerrten Inphase- (I) bzw. Quadratur-Signale (Q) mit den entzerrten Inphase- und Quadratur-Signalen stammen.

12. Empfänger nach einem der vorhergehenden Ansprüche,
**dadurch gekennzeichnet,**
**dass** zumindest einem Entzerrer eine Forward-Error-Correction-Einheit nachgeschaltet ist.

13. Verfahren zur Entzerrung eines quadraturmodulierten Signals, das in ein Inphase- (I) und ein Quadratur-Signal (Q) aufgeteilt wird,
**dadurch gekennzeichnet,**
**dass** durch eine Entzerrung des Inphase-Signals (I) ein entzerrtes erstes Inphase-Signal (I1) erzeugt wird,
**dass** durch eine Entzerrung des Quadratur-Signals (Q) ein entzerrtes erstes Quadratur-Signal (Q1) erzeugt wird,
**dass** durch eine weitere Entzerrung des Quadratur-Signals (Q) in Abhängigkeit vom entzerrten ersten Inphase-Signal (I1) ein entzerrtes zweites Quadratur-Signal (Q2) erzeugt und abgegeben wird,
**dass** durch eine weitere Entzerrung des Inphase-Signals (I) in Abhängigkeit vom entzerrten ersten Quadratur-Signal (Q1) ein entzerrtes zweites Inphase-Signal (I2) erzeugt und abgegeben wird.

14. Verfahren nach Anspruch 13,
**dadurch gekennzeichnet,**
**dass** das Inphase-Signal (I) einem fünften Entzerrer (EZ5) und das Quadratur-Signal (Q) einem sechsten Entzerrer (EZ6) zugeführt wird,
**dass** das entzerrte zweite Inphase-Signal (I2) dem sechsten Entzerrer (EZ6) zugeführt wird, der eine Entzerrung des Quadratur-Signals (Q) in Abhängigkeit vom entzerrten zweiten Inphase-Signals (I2) durchführt und ein entzerrtes drittes Quadratur-Signal (Q3) abgibt,
**dass** das entzerrte zweite Quadratur-Signal (Q2) dem fünften Entzerrer (EZ5) zugeführt wird, der eine Entzerrung des Inphase-Signals (I) in Abhängigkeit vom entzerrten zweiten Quadratur-Signal (Q2) durchführt und ein entzerrtes drittes Inphase-Signal (I3) abgibt.

15. Verfahren nach Anspruch 14,
**dadurch gekennzeichnet,**
**dass** weitere Entzerrer nachgeschaltet werden, denen jeweils das Inphase- (I) oder Quadratur-Signal (Q) sowie das jeweils andere entzerrte Signal der vorhergehenden Stufe zugeführt wird, so dass mindestens eine weitere Entzerrung durchgeführt wird.

16. Verfahren nach einem der vorhergehenden Ansprüche 13 bis 15,
**dadurch gekennzeichnet,**
**dass** vor der Entzerrung das Inphase- (I) und das Quadratur-Signal (Q) analog-digital umgesetzt wird.

17. Verfahren nach Anspruch 16,
**dadurch gekennzeichnet,**
**dass** die Entzerrer als digitale Filter ausgeführt werden.

18. Verfahren nach einem der Ansprüche 13 bis 17,
**dadurch gekennzeichnet,**
**dass** die Entzerrer als Maximum-Likelihood-Sequence-Estimation-Entzerer ausgestaltet werden.

19. Verfahren nach Anspruch 18,
**dadurch gekennzeichnet,**
**dass** in den Maximum-Likelihood-Sequence-Estimation-Entzerrern eine Vergleichstabelle und eine einen Viterbi-Algorithmus ausführende Vergleichseinrichtung vorgesehen wird.

20. Verfahren nach Anspruch 19,
**dadurch gekennzeichnet,**
**dass** die Vergleichstabelle des ersten und zweiten Entzerrers mit ersten Daten einer ersten Metrik initialisiert und die weiteren Entzerrer mit zweiten Daten einer zweiten Metrik initialisiert werden.

21. Verfahren nach Anspruch 20,
**dadurch gekennzeichnet,**
**dass** die ersten und zweiten Daten der ersten und zweiten Metrik durch einen Vergleich der unentzerrten Inphase- (I) bzw. Quadratur-Signale (Q) mit den entzerrten Inphase- bzw. Quadratur-Signale ermittelt werden.

## Claims

1. Receiver for a quadrature-modulated signal which can be divided into an in-phase signal (I) and a quadrature signal (Q), **characterized in that** the in-phase signal (I) is supplied to a first and a third equalizer (EZ1, EZ3) and the quadrature signal (Q) is supplied to a second and a fourth equalizer (EZ2, EZ4), in which the first and second equalizer (EZ1, EZ2) in each case carries out a first equalization of the respective signal, **in that** an output of the first equalizer (EZ1) is connected to a second input of the fourth equalizer (EZ4) which, by means of a second equalization of the quadrature signal (Q) in dependence on the supplied equalized in-phase signal (I1) of the first equalizer (EZ1), delivers an equalized quadrature signal (Q2),
**in that** an output of the second equalizer (EZ2) is connected to a second input of the third equalizer (EZ3) which, by means of a second equalization of the in-phase signal (I) in dependence on the supplied equalized quadrature signal (Q1) of the second equalizer (EZ2), delivers an equalized in-phase signal (I2).

2. Receiver according to Claim 1, **characterized in that** the in-phase signal (I) is supplied to a fifth equalizer (EZ5) and the quadrature signal (Q) is supplied to a sixth equalizer (EZ6),
**in that** the output of the third equalizer (EZ3) is connected to a second input of the sixth equalizer (EZ6) and the output of the fourth equalizer (EZ4) is connected to a second input of the fifth equalizer (EZ5) so that the fifth and sixth equalizer (EZ5, EZ6) carry out a third equalization in dependence on the result of the second equalization of the other signal in each case and an equalized in-phase signal (I) or quadrature signal (Q) is present at the output of the fifth and sixth equalizer (EZ5, EZ6).

3. Receiver according to Claim 2, **characterized in that** further downstream equalizers are provided which are in each case supplied with the in-phase signal (I) or quadrature signal (Q) and the respective other equalized signal of the preceding stage so that at least one further equalization can be carried out.

4. Receiver according to one of the preceding claims, **characterized in that** the signal path of the in-phase signal (I) and of the quadrature signal (Q) in each case has an analog/digital converter (ADC1, ADC2).

5. Receiver according to one of the preceding claims, **characterized in that** the equalizers are constructed as digital filters.

6. Receiver according to one of Claims 1 to 5, **characterized**
**in that** the equalizers are constructed as maximum likelihood sequence estimation equalizers.

7. Receiver according to one of Claims 1 to 4, **characterized**
**in that** at least one equalizer is constructed as a series circuit of a filter and of a maximum likelihood sequence estimation equalizer or of a threshold switch or a detection device.

8. Receiver according to Claim 7, **characterized in that** the filter is constructed as FIR filter, IIR filter or analog filter.

9. Receiver according to Claim 6, 7 or 8, **characterized in that** the maximum likelihood sequence estimation equalizers have a comparison table and a comparison device which carries out a Viterbi algorithm.

10. Receiver according to Claim 9, **characterized in that** the comparison table of the first and second equalizer is initialized with first data of a first metric and the further equalizers are initialized with second data of a second metric.

11. Receiver according to Claim 10, **characterized in that** the first and second data of the first and second metric originate from a comparison of the unequalized in-phase signals (I) and quadrature signals (Q) with the equalized in-phase signals and quadrature signals.

12. Receiver according to one of the preceding claims, **characterized in that** at least one equalizer is followed by a forward error correction unit.

13. Method for equalizing a quadrature-modulated signal which is divided into an in-phase signal (I) and a quadrature signal (Q),
**characterized in that** by means of an equalization of the in-phase signal (I), an equalized first in-phase signal (I1) is generated,
**in that** by means of an equalization of the quadrature signal (Q), an equalized first quadrature signal (Q1) is generated,
**in that** by means of a further equalization of the quadrature signal (Q) in dependence on the equalized first in-phase signal (I1), an equalized second quadrature signal (Q2) is generated and delivered,
**in that** by means of a further equalization of the in-phase signal (I) in dependence on the equalized first quadrature signal (Q1), an equalized second in-phase signal (I2) is generated and delivered.

14. Method according to Claim 13, **characterized in that** the in-phase signal (I) is supplied to a fifth equalizer (EZ5) and the quadrature signal (Q) is supplied to a sixth equalizer (EZ6),
**in that** the equalized second in-phase signal (I2) is supplied to the sixth equalizer (EZ6) which equalizes the quadrature signal (Q) in dependence on the equalized second in-phase signal (I2) and delivers an equalized third quadrature signal (Q3),
**in that** the equalized second quadrature signal (Q2) is supplied to the fifth equalizer (EZ5) which equalizes the in-phase signal (I) in dependence on the equalized second quadrature signal (Q2) and delivers an equalized third in-phase signal (I3) .

15. Method according to Claim 14, **characterized in that** further equalizers are connected downstream which are in each case supplied with the in-phase signal (I) or quadrature signal (Q) and the respective other equalized signal of the preceding stage so that at least one further equalization is carried out.

16. Method according to one of the preceding Claims 13 to 15, **characterized in that** before the equalization, the in-phase signal (I) and the quadrature signal (Q) are converted from analog to digital.

17. Method according to Claim 16, **characterized in that** the equalizers are constructed as digital filters.

18. Method according to one of Claims 13 to 17, **characterized**
**in that** the equalizers are constructed as maximum likelihood sequence estimation equalizers.

19. Method according to Claim 18, **characterized in that** a comparison table and a comparison device executing a Viterbi algorithm are provided in the maximum likelihood sequence estimation equalizers.

20. Method according to Claim 19, **characterized in that** the comparison table of the first and second equalizer is initialized with first data of a first metric and the further equalizers are initialized with second data of a second metric.

21. Method according to Claim 20, **characterized in that** the first and second data of the first and second metric are determined by comparing the unequalized in-phase signals (I) or quadrature signals (Q) with the equalized in-phase signals or quadrature signals, respectively.

## Revendications

1. Récepteur pour un signal modulé en quadrature, qui peut être divisé en un signal en phase (I) et un signal en quadrature (Q),
**caractérisé en ce que**
le signal en phase (I) est amené à un premier et un troisième correcteur (EZ1, EZ3) et le signal en quadrature (Q) à un second et un quatrième correcteur (EZ2, EZ4), dans lequel le premier et le second correcteur (EZ1, EZ2) effectuent à chaque fois une première correction du signal respectif, **en ce qu'**une sortie du premier correcteur (EZ1) est reliée à une seconde entrée du quatrième correcteur (EZ4), qui délivre un signal en quadrature (Q2) corrigé par une seconde correction du signal en quadrature (Q) en fonction du signal en phase (I1) corrigé et amené du premier correcteur (EZ1),
**en ce qu'**une sortie du second correcteur (EZ2) est reliée à une seconde entrée du troisième correcteur (EZ3), qui délivre un signal en phase (I2) corrigé par une seconde correction du signal en phase (I) en fonction du signal en quadrature (Q1) corrigé et amené du second correcteur (EZ2).

2. Récepteur selon la revendication 1,
**caractérisé en ce que**
le signal en phase (I) est amené à un cinquième correcteur (EZ5) et le signal en quadrature (Q) à un sixième correcteur (EZ6),
**en ce que** la sortie du troisième correcteur (EZ3) est reliée à une seconde entrée du sixième correcteur (EZ6) et la sortie du quatrième correcteur (EZ4) à une seconde entrée du cinquième correcteur (EZ5), de sorte que le cinquième et le sixième correcteur (EZ5, EZ6) effectuent une troisième correction en fonction du résultat de la seconde correction de l'autre signal respectif et un signal en phase (I) ou un signal en quadrature (Q) s'applique à la sortie du cinquième et du sixième correcteur (EZ5, EZ6).

3. Récepteur selon la revendication 2,
**caractérisé en ce que**
d'autres correcteurs placés en aval sont prévus, auxquels sont amenés à chaque fois le signal en phase (I) ou le signal en quadrature (Q) ainsi que l'autre signal corrigé respectif du niveau précédent, de sorte qu'au moins une autre correction peut être effectuée.

4. Récepteur selon l'une quelconque des revendications précédentes,
**caractérisé en ce que**
le trajet du signal en phase (I) et du signal en quadrature (Q) présente à chaque fois un convertisseur analogique-numérique (ADC1, ADC2).

5. Récepteur selon l'une quelconque des revendications précédentes,
**caractérisé en ce que**
les correcteurs sont conçus sous forme de filtres numériques.

6. Récepteur selon l'une quelconque des revendications 1 à 5,
**caractérisé en ce que**
les correcteurs sont conçus sous forme de correcteurs d'Estimation de la Séquence à Vraisemblance Maximale (Maximum-Likelihood-Sequence Estimation).

7. Récepteur selon l'une quelconque des revendications 1 à 4,
**caractérisé en ce que**
au moins un correcteur est conçu sous forme de montage en série d'un filtre et d'un correcteur d'Estimation de la Séquence à Vraisemblance Maximale ou d'un interrupteur à valeur seuil ou d'un dispositif de détection.

8. Récepteur selon la revendication 7,
**caractérisé en ce que**
le filtre est conçu sous forme de FIR, IIR ou filtre analogique.

9. Récepteur selon la revendication 6, 7 ou 8,
**caractérisé en ce que**
les correcteurs d'Estimation de la Séquence à Vraisemblance Maximale présentent un tableau de comparaison et un dispositif de comparaison qui exécute un algorithme de Viterbi.

10. Récepteur selon la revendication 9,
**caractérisé en ce que**
le tableau de comparaison du premier et du second correcteur est initialisé avec des premières données d'une première métrique et les autres correcteurs avec des secondes données d'une seconde métrique.

11. Récepteur selon la revendication 10,
**caractérisé en ce que**
les premières et les secondes données de la première et de la seconde métrique proviennent d'une comparaison des signaux en phase (I) resp. en quadrature (Q) non corrigés avec les signaux en phase et en quadrature corrigés.

12. Récepteur selon l'une quelconque des revendications précédentes,
**caractérisé en ce que**
une unité Forward-Error-Correction est montée en aval d'au moins un correcteur.

13. Procédé pour la correction d'un signal modulé en quadrature, qui est divisé en un signal en phase (I) et un signal en quadrature (Q),
**caractérisé en ce que**
un premier signal en phase (I1) corrigé est généré par une correction du signal en phase (I),
**en ce qu'**un premier signal en quadrature (Q1) corrigé est généré par une correction du signal en quadrature (Q),
**en ce qu'**un second signal en quadrature (Q2) corrigé est généré et délivré par une seconde correction du signal en quadrature (Q) en fonction du premier signal en phase (I1) corrigé,
**en ce qu'**un second signal en phase (I2) corrigé est généré et délivré par une seconde correction du signal en phase (I) en fonction du premier signal en quadrature (Q1) corrigé.

14. Procédé selon la revendication 13,
**caractérisé en ce que**
le signal en phase (I) est amené à un cinquième correcteur (EZ5) et le signal en quadrature (Q) à un sixième correcteur (EZ6),
**en ce que** le second signal en phase (I2) corrigé est amené au sixième correcteur (EZ6), qui effectue une correction du signal en quadrature (Q) en fonction du second signal en phase (I2) corrigé et délivre un troisième signal en quadrature (Q3) corrigé,
**en ce que** le second signal en quadrature (Q2) corrigé est amené au cinquième correcteur (EZ5), qui effectue une correction du signal en phase (I) en fonction du second signal en quadrature (Q2) corrigé et délivre un troisième signal en phase (I3) corrigé.

15. Procédé selon la revendication 14,
**caractérisé en ce que**
d'autres correcteurs sont montés en aval, auxquels sont amenés respectivement le signal en phase (I) ou le signal en quadrature (Q) ainsi que l'autre signal corrigé respectif du niveau antérieur, de sorte qu'au moins une autre correction est effectuée.

16. Procédé selon l'une quelconque des revendications 13 à 15,
**caractérisé en ce que**
le signal en phase (I) et le signal en quadrature (Q) font l'objet d'une conversion analogique-numérique avant la correction.

17. Procédé selon la revendication 16,
**caractérisé en ce que**
les correcteurs sont réalisés sous forme de filtres numériques.

18. Procédé selon l'une quelconque des revendications 13 à 17,
**caractérisé en ce que**
les correcteurs sont conçus sous forme de correcteurs d'Estimation de la Séquence à Vraisemblance Maximale.

19. Procédé selon la revendication 18,
**caractérisé en ce que**
un tableau de comparaison et un dispositif de comparaison exécutant un algorithme de Viterbi sont prévus dans les correcteurs d'Estimation de la Séquence à Vraisemblance Maximale.

20. Procédé selon la revendication 19,
**caractérisé en ce que**
le tableau de comparaison du premier et du second correcteur est initialisé avec des premières données d'une première métrique et les autres correcteurs avec des secondes données d'une seconde métrique.

21. Procédé selon la revendication 20,
**caractérisé en ce que**
les premières et secondes données de la première et de la seconde métrique sont déterminées par une comparaison du signal en phase (I) resp. du signal en quadrature (Q) non corrigé avec le signal en phase resp. en quadrature corrigé.
